# EUROPÄISCHE PATENTSCHRIFT

(11) **EP 0 818 337 B1**
(45) Veröffentlichungstag und Bekanntmachung des Hinweises auf die Patenterteilung: **21.08.2002**
(21) Anmeldenummer: 97110477.3
(22) Anmeldetag: 26.06.1997
(51) Int. Cl.: B60H 3/06

(54) **Fahrzeug**
Vehicle
Véhicule

(30) Priorität: 12.07.1996 DE 19628111
(43) Veröffentlichungstag der Anmeldung: 14.01.1998
(73) Patentinhaber: Micro Compact Car smart GmbH, 71272 Renningen (DE)
(72) Erfinder: Jeckel, Alfred, 72108 Rottenburg (DE); Steinmetz, Hermann-Josef, 71034 Böblingen (DE)

(56) Entgegenhaltungen:
- DE-A- 4 224 051
- DE-C- 4 401 022
- DE-C- 19 505 213

## Beschreibung

Die Erfindung betrifft ein Fahrzeug, insbesondere einen Personenkraftwagen, gemäß dem Oberbegriff des Patentanspruchs 1.

Bei einem bekannten Fahrzeug dieser Art (DE-A-42 24 051 A1) umfaßt die Frischluftzuführvorrichtung für den Fahrgastinnenraum einen Luftkasten mit Wasserablauf und zwei in dem Luftkasten befestigte Filtergehäuse, in denen jeweils ein Luftfilter gehalten ist. Jedes Filtergehäuse ist beabstandet zur Rückseite der Motor- oder Fronthaube angeordnet, wodurch um jedes Gehäuse herum ein erster Luftführungskanal gebildet ist, der von einem Frischlufteintritt zum Luftfilter führt. Nach dem Durchströmen der Luftfilter wird die Luft über einen in jedem Filtergehäuse ausgebildeten zweiten Luftführungskanal geführt. Die beiden zweiten Luftführungskanäle münden in einem Luftsammelraum, der um die Stirnwandöffnung herum auf die Stirnwand aufgesetzt ist. Durch die ersten Luftführungskanäle wird die Frischluft zum Eintritt in die Luftfilter dreimal umgelenkt, wodurch erreicht wird, daß schwere Partikel und vor allem Feuchtigkeitstropfen sich aus dem Luftstrom absondern und aufgrund der Schwerkraft an die tiefste Stelle des Luftkastens gelangen und über den Wasserablauf abfließen.

Die aus DE-A-4 224 051 bekannte Frischluftzuführvorrichtung für ein Fahrzeug ist aus einer relativ großen Anzahl von Einzel komponenten aufgebaut, was die Herstellung aufwendig und damit teuer nacht.

Der Erfindung liegt die Aufgabe zugrunde, für die Frischluftzuführung in einem Fahrzeug der eingangs genannten Art eine sog. Low cost-Lösung zu schaffen, d.h. die Frischluftzuführvorrichtung mit minimalen Gestehungskosten zu realisieren.

Die Aufgabe ist bei einem Fahrzeug der im Oberbegriff des Patentanspruchs 1 genannten Gattung erfindungsgemäß durch die Merkmale im Kennzeichenteil des Anspruchs 1 gelöst.

Das erfindungsgemäße Fahrzeug hat den Vorteil, daß dessen gesamte Vorrichtung zur Frischluftzufuhr einstückig ist, mit einem einzigen Spritzgußwerkzeug herstellbar und mit nur wenigen Handgriffen montierbar und zum Filterwechsel demontierbar ist. Luftführung, Filteraufnahme und Wasserablauf werden in einem einzigen Bauteil mittels der erfindungsgemäßen Kunststoffschale realisiert, die im Zusammenwirken mit der im Fahrzeug notwendigerweise vorhandenen Stirnwand mit Stirnwandöffnung das geschlossene System zur Frischluftzufuhr bildet.

Vorteilhafte Ausführungsformen des erfindungsgemäßen Fahrzeugs mit zweckmäßigen Weiterbildungen und Ausgestaltungen der Erfindung sind in den weiteren Patentansprüchen angegeben.

Gemäß einer bevorzugten Ausführungsform der Erfindung weist die kunststoffschale eine vorzugsweise einstückig angespritzte Aufnahmevorrichtung für den Luftfilter auf, die so angeordnet ist, daß der darin aufgenommene Luftfilter in Einbaulage die Stirnwandöffnung unmittelbar überspannt. Der Luftfilter ist dabei auf drei Seiten seines quer zur Filterfläche verlaufenden Filterrahmens gegen die Schale und auf einer Seite seines Filterrahmens unmittelbar gegen die Stirnwand abgedichtet. Zum Filterwechsel wird die Schale von der Stirnwand gelöst, der Luftfilter aus der Aufnahmevorrichtung entfernt und ein neuer oder der gereinigte Luftfilter wieder eingesetzt. Mit Ansetzen der Schale an die Stirnwand drückt sich die eine Filterrahmenseite mit ihrer Kante an einer an der Stirnwand gehaltenen Dichtung an, wodurch ein Luftbypass um den Luftfilter herum vermieden wird.

Gemäß einer alternativen Ausführungsform der Erfindung ist der wechselbar in der Aufnahmevorrichtung aufgenommenen Luftfilter in der Aufnahmevorrichtung auf allen vier Seiten seines quer zur Filterfläche verlaufenden Filterrahmens gegen die Schale abgedichtet. In dem der in Luftströmungsrichtung gesehen vorderen Filterfläche gegenüberliegenden, vorderen Bereich der Kunststoffschale ist eine Öffnung für den Filterwechsel vorgesehen, die mit einem Deckel verschließbar ist. Bei dieser Ausführungsform ist der Filterwechsel ohne Demontage der Kunststoffschale möglich. Der Deckel wird einfach gelöst und danach aus einer an der Schale angespritzten Steck- oder Clipsaufnahme abgezogen. Nach Filterwechsel wird der Deckel wieder in die Steck- oder Clipsaufnahme eingesteckt und zusätzlich an der Stirnwand festgelegt.

Gemäß einer vorteilhaften Ausführungsform der Erfindung sind die Aufnahmevorrichtung für den Luftfilter und die den Lufteinlaß bildende Öffnung der Schale jeweils nahe eines der in Einbaulage sich in Fahrtrichtung erstreckenden Seitenbereiche der Schale angeordnet. Dadurch wird ein größtmöglicher Strömungsweg für die vom Lufteinlaß zum Luftfilter strömende Frischluft erzielt, so daß in Verbindung mit der gemäß einer weiteren Ausführungsform der Erfindung im oberen Bereich der Schale angeordneten Öffnung für den Lufteinlaß zusätzlich der Luftstrom mehrfach umgelenkt wird. Somit kann sich im Luftführungskasten aus extrem feuchter Luft ausreichend Wasser abscheiden, bevor die Frischluft durch den Luftfilter hindurchtritt.

Dies wird noch dadurch unterstützt, daß gemäß einer vorteilhaften Ausführungsform der Erfindung die den Lufteinlaß bildende Öffnung der Schale in Einbaulage unterhalb eines karosserieseitigen Frischlufteintritts zu diesem in Fahrzeuglängsrichtung versetzt liegt und im Frischluftweg zwischen Frischlufteintritt und Öffnung eine von der Schale wegweisende Prallfläche mit Abstand vertikal unter dem Frischlufteintritt angeordnet ist. An dieser Prallfläche scheidet sich bereits ein Teil der Schmutz- und Wasserpartikel aus der über den karosserieseitigen Frischlufteintritt einströmenden Frischluft ab, bevor diese über die Öffnung in den Luftführungskasten gelangt.

Die Erfindung ist anhand eines in der Zeichnung dargestellten Ausführungsbeispiels im folgenden näher beschrieben. Es zeigen:
- Fig. 1: ausschnittweise einen Horizontalschnitt eines Karosserievorbaus eines Personenkraftwagens.
- Fig. 2: einen Schnitt längs der Linie II-II in Fig. 1.
- Fig. 3: ausschnittweise einen Schnitt längs der Linie III-III in Fig. 1.
- Fig. 4: eine vergrößerte Darstellung des Ausschnitts IV in Fig. 2.
- Fig. 5: eine gleiche Darstellung wie in Fig. 1 eines modifizierten Fahrzeugs.

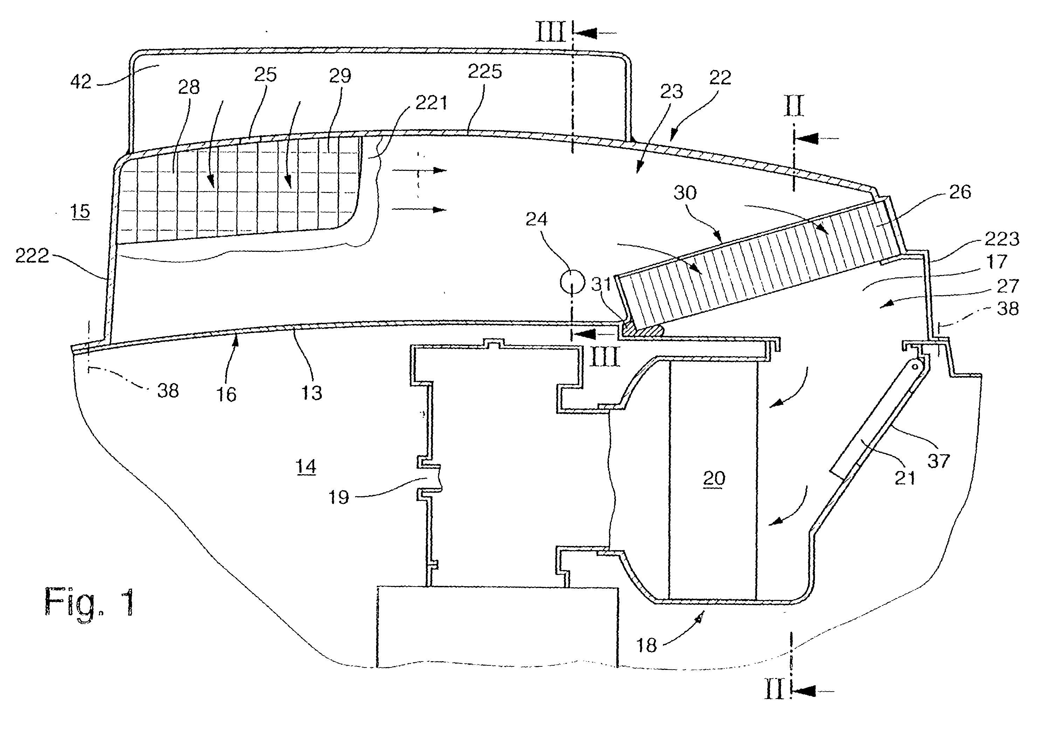

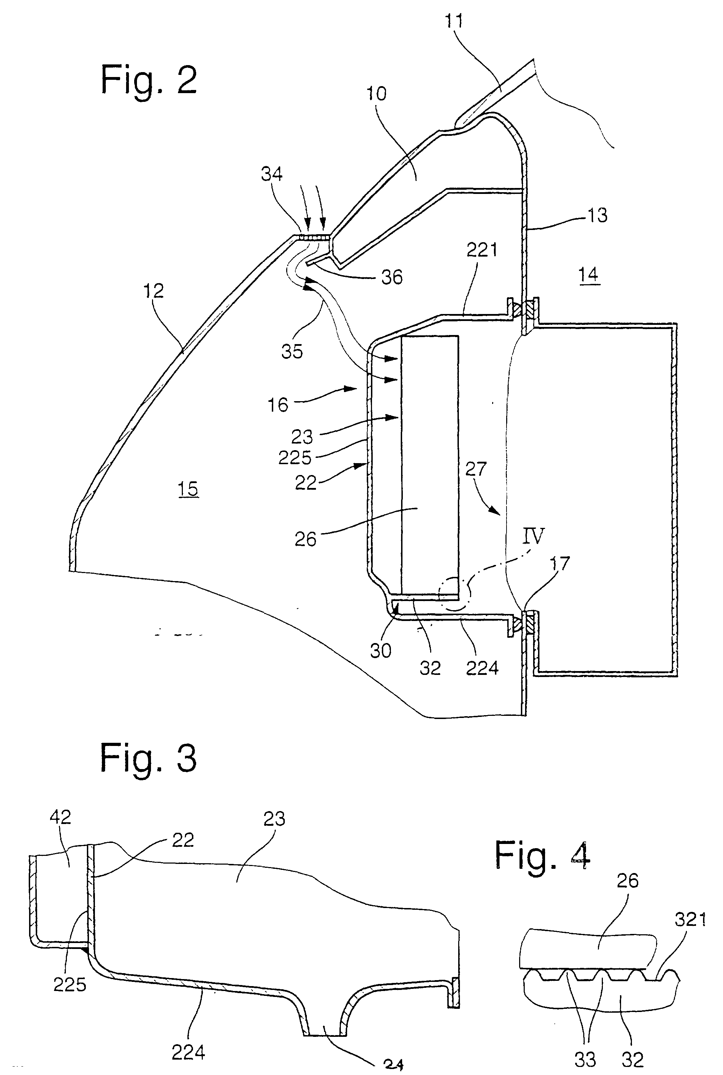

Bei dem in Fig. 1 im Horizontalschnitt und in Fig. 2 im Vertikalschnitt ausschnittweise dargestellten Karosserievorbau eines Personenkraftwagens ist mit 10 der sog. Querträger, mit 11 die Frontscheibe und mit 12 die Front- oder Motorhaube bezeichnet. Eine Stirnwand 13 trennt im Innern der Karosserie einen Fahrgastraum 14 von einem über die Fronthaube 12 zugänglichen Motorraum 15. Im Motorraum 15 ist eine Vorrichtung 16 zur Zuführung von Frischluft in den Fahrgastraum 14 durch eine Stirnwandöffnung 17 hindurch angeordnet. Im Fahrgastraum 14 schließt sich an die Stirnwandöffnung 17 eine Heiz- oder Klimaanlage 18 an, in der die über die Stirnwandöffnung 17 einströmende Frischluft aufgeheizt oder klimatisiert wird, bevor sie über Luftdüsen 19 in den Fahrgastraum 14 einströmt. Mit 20 ist ein Wärmetauscher der Heiz- oder Klimaanlage 18 und mit 21 eine Umluftklappe angedeuet. Mittels der Umluftklappe 21 kann die Stirnwandöffnung 17 geschlossen werden, so daß die Frischluftzufuhr zu der Heiz- oder Klimaanlage 18 gesperrt und letztere nur mit aus dem Fahrgastraum 14 entnommener Umluft gespeist wird.

Die Luftzuführvorrichtung 16 weist eine Schale 22 aus Kunststoff auf, die unter Einbeziehung der Stirnwandöffnung 17 randseitig dicht auf der Stirnwand 13 aufliegt und an dieser befestigt ist und mit dieser einen hermetisch geschlossenen, mit einem Wasserablauf 24 versehenen Luftführungskasten 23, in dem über einen Lufteinlaß 25 eintretende Frischluft umgelenkt und über einen Luftfilter 26 geführt wird und schließlich über einen von der Stirnwandöffnung 17 gebildeten Luftauslaß 27 in den Fahrgastraum 15 bzw. in die dort angeordnete Heiz- oder Klimaanlage 18 einströmt. Wie in Fig. 1 nur prinzipiell angedeutet ist, ist für den Lufteinlaß 25 eine Öffnung 28 in dem in Einbaulage oberen Bereich 221 der Schale 22 angeordnet, die mit einem an die Schale einstückig angespritzten Einlaßgitter 29 überdeckt ist. Die Öffnung 28 ist dabei unmittelbar an dem einen der in Einbaulage sich in Fahrtrichtung erstreckenden Seitenbereiche 222 angeordnet, so daß sich eine maximale Luftstrecke zwischen dem Lufteinlaß 25 und dem Luftauslaß 27 ergibt, der nächstliegend dem anderen Seitenbereich 223 der Schale 22 ist.

In der Schale 22 ist eine Aufnahmevorrichtung 30 für den Luftfilter 26 einstückig angespritzt, die bis zum Seitenbereich 223 der Schale 22 hin reicht und so angeordnet ist, daß in Einbaulage der in der Aufnahmevorrichtung 30 aufgenommene Luftfilter 26 die Stirnwandöffnung 17 überspannt. Der wechselbar in der Aufnahmevorrichtung 30 aufgenommene Luftfilter 26 ist auf drei Seiten seines quer zur Filterfläche verlaufenden Filterrahmens gegen die Schale 22 und auf einer Seite gegen die Stirnwand 13 abgedichtet. Eine hierzu an der Stirnwand 13 gehaltene Dichtung ist in Fig. 1 mit 31 bezeichnet. Wie aus Fig. 2 ersichtlich, besitzt die Aufnahmevorrichtung 30 nahe dem unteren Schalenbereich 224 einen Aufsetzsteg 32 für den Luftfilter 26, dessen Aufsetzfläche 321 für die Unterseite des Filterrahmens mit Parallelrippen 32 versehen ist, die sich parallel zu der Filterfläche erstrecken. Die Rippenausführung der Aufsetzfläche 321 ist in der vergrößerten Ausschnittsdarstellung in Fig. 4 deutlich zu erkennen. Nahe dem von dem Schalenseitenbereich 223 abgekehrten freien Ende des Aufsetzsteges 32 ist im unteren Bereich 224 der Schale 22 der Wasserablauf 24 angeordnet, wie dies in der Schnittdarstellung der Fig. 3 zu sehen ist.

Die den Lufteinlaß 25 bildende Öffnung 28 in der Schale 22 steht mit einem karosseriesseitigen Frischlufteintritt 34 in Verbindung, wie dies in Fig. 2 durch Strömungspfeile 35 angedeutet ist. Die Öffnung 28 ist dabei unterhalb des Frischlufteintritts 34 und diesem gegenüber in Fahrzeuglängsrichtung zurückversetzt. Der Frischluftweg zwischen dem Frischlufteintritt 34 und der Öffnung 28 ist gegenüber dem Motorraum 14 abgedichtet, was aus den verschiedenen Schnittdarstellungen der Zeichnung nicht ersichtlich ist. Der Frischlufteintritt 34 ist unmittelbar am Querträger 10 in der Karosserie angeordnet, kann aber auch in der Front- oder Motorhaube 12 vorgesehen werden. Unmittelbar unterhalb des Frischlufteintritts 34 und mit Abstand von diesem ist eine von der Schale 22 wegweisende Prallfläche 36 angeordnet, die zur zusätzlichen Umlenkung des Luftstroms zwischen Frischlufteintritt 34 und Öffnung 28 dient, so daß die über den Frischlufteintritt 34 einströmende Frischluft an der Prallfläcne 36 eine erste Wasser/-Schmutzpartikelabscheidung erfährt.

Bei der beschriebenen Vorrichtung 16 zur Frischluftzufuhr in den Fahrgastraum 15 strömt Frischluft über den karosserieseseitigen Frischlufteintritt 34 ein, wird über die Prallfläche 36 umgelenkt und gelangt über das Einlaßgitter 29 bzw. die Öffnung 28 im oberen Bereich 221 unmittelbar an dem einen Seitenbereich 222 der Schale 22 in den von der Schale 22 und der Stirnwand 13 gebildeten Luftführungskasten 23. Im Luftführungskasten 23 wird die Luft auf ihrem Weg vom Lufteinlaß 25 zum Luftauslaß 27 wiederum umgelenkt, durchströmt den in der Aufnahmevorrichtung 30 gehaltenen Luftfilter 26 und strömt über die Stirnwandöffnung 17 in die Heiz- oder Klimaanlage 18 im Fahrgastraum 14 ein. Dort wird die Luft wunschgemäß klimatisiert und gelangt über die Luftdüsen 19 in den Fahrgastraum 15. Soll die Frischluft abgesperrt werden, so wird die Umluftklappe 21 in Fig. 1 im Uhrzeigersinn soweit geschwenkt, daß sie die Stirnwandöffnung 17 abschließt. Gleichzeitig wird dabei eine Umluftöffnung 37 freigegeben, so daß nunmehr die Heizungs- oder Klimaanlage 18 ohne Frischluftzusatz ausschließlich mit dem Fahrgastraum 15 entnommener Umluft gespeist wird. Die bei feuchter Luft durch die Luftumlenkung im Luftführungskasten 23 ausfallenden Wassertropfen gelangen durch die Schwerkraft in den unteren Bereich 224 der Schale 22, und das dort sich ansammelnde Wasser fließt über den Wasserablauf 24 in den Motorraum 14 ab.

Zum Filterwechsel muß die Schale 22 von der Stirnwand 13 abgenommen werden, wonach der Luftfilter 26 aus der Aufnahmevorrichtung 30 herausgezogen werden kann. Um den Filterwechselvorgang montagefreundlich zu gestalten, ist die Schale 22 an der Stirnwand 13 angeclipst, wie dies durch Strichpunktierung 38 in Fig. 1 angedeutet ist.

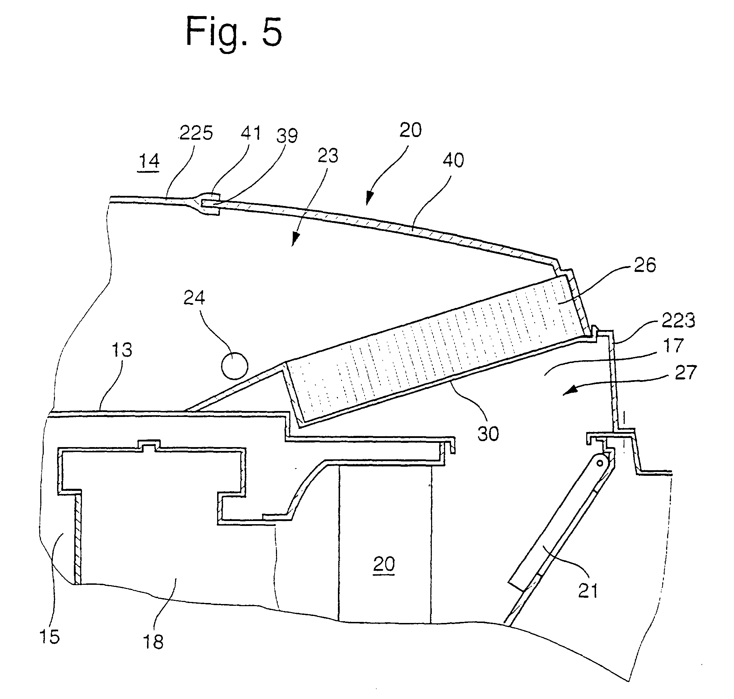

Zur Vereinfachung des Filterwechsels ist bei der in Fig. 5 dargestellten modifizierten Ausführung der Luftzuführvorrichtung 16 in dem in Einbaulage vorderen Bereich 225 der Schale 22 eine Aussparung 39 vorgesehen. deren lichter Querschnitt größer ist als die Filterfläche des Luftfilters 26. Die Aussparung, die sich über den einen Schalenseitenbereich 222 bis hin zur Stirnwand 13 erstreckt. ist von einem Deckel 40 verschlossen, der längs einer seiner Seiten in einer an der Schale 22 einstückig ausgebildeten Steckaufnahme 41 eingesteckt ist und an der gegenüberliegenden Seite an die Stirnwand 13 angeclipst ist. Die Aufnahmevorrichtung 30 für den Luftfilter 26 ist insofern modifiziert, als der in der Aufnahme 30 aufgenommene Luftfilter 26 nunmehr auf allen vier Seiten seines quer zur Filterfläche verlaufenden Filterrahmens gegen die Schale 22 abgedichtet ist. Nach Entfernen des Deckels 40 kann der Luftfilter 26 durch die Aussparung 39 hindurch nach vorn abgezogen werden.

Für eine weitere Kompaktheit der Bauweise und Einsparung von Fertigungskosten kann ein in jedem Fahrzeug vorhandener Wasserbehälter 42 für die erforderliche Scheibenwaschanlage des Fahrzeugs fest mit der Schale 22 verbunden sein. Dieser ebenfalls aus Kunststoff gefertigte Wasserbehälter 42 ist als einseitig offener Hohlkörper im Spritz- oder Druckgußverfahren hergestellt, wobei in eine der Wände ein Einsetzloch für die Waschpumpe vorgesehen ist. Der Hohlkörper wird mit seiner Öffnung im vorderen Bereich 225 der Schale 22 auf deren Außenseite aufgesetzt und längs des Öffnungsrandes an der Schale 22 verschweißt, so daß die von der Stirnwand 13 abgekehrte Frontseite der Schale 22 eine Wand des Wasserbehälters bildet. Zum Schweißen wird das Spiegelschweißverfahren angewendet.

## Patentansprüche

1. Fahrzeug, insbesondere Personenkraftwagen, mit einer einen Motor- (15) und Fahrgastraum (14) umschließeden Fahrzeugkarosserie, mit einer Motor- (15) und Fahrgastraum (14) voneinander trennenden Stirnwand (13) und mit einer im Motorraum (15) angeordneten Vorrichtung zur Zuführung von Frischluft in den Fahrgastraum (14) durch eine in der Stirnwand (13) vorhandene Öffnung hindurch, die einen mit einem Luftein- (25) und -auslaß (27) sowie einem Wasserablauf versehenen Luftführungskasten (23) und einen im Luftführungskasten (23) angeordneten Luftfilter (26) aufweist,
**gekennzeichnet durch**
eine zusammen mit der Stirnwand (13) den Luftführungskasten (23) bildende Schale (22) aus Kunststoff mit integrierter. den Lufteinlaß (25) bildender Öffnung (28), die unter Einbeziehung der den Luftauslaß (27) bildenden Stirnwandöffnung(17) randseitig dicht auf der Stirnwand (13) aufliegt und an dieser lösbar befestigt ist.

2. Fahrzeug nach Anspruch 1,
**dadurch gekennzeichnet,**
**daß** die Schale (22) eine vorzugsweise einstückig angespritzte Aufnahmevorrichtung (30) für den Luftfilter (26) aufweist, die so angeordnet ist, daß der Luftfilter (26) in Einbaulage die Stirnwandöffnung (17) überspannt.

3. Fahrzeug nach Anspruch 2,
**dadurch gekennzeichnet,**
**daß** der wechselbar in der Aufnahmevorrichtung (30) aufgenommene Luftfilter (26) auf drei Seiten seines quer zur Filterfläche verlaufenden Filterrahmens gegen die Schale (22) und auf einer Seite gegen die Stirnwand (13) abgedichtet ist.

4. Fahrzeug nach Anspruch 2,
**dadurch gekennzeichnet,**
**daß** der wechselbar in der Aufnahmevorrichtung (30) aufgenommene Luftfilter (26) auf allen vier Seiten seines quer zur Filterfläche verlaufenden Filterrahmens gegen die Schale (22) abgedichtet ist und daß in dem der in Luftströmungsrichtung vorderen Filterfläche gegenüberliegenden vorderen Bereich (225) der Schale (22) eine Aussparung (39) zum Filterwechsel vorgesehen ist, die mit einem Deckel (40) verschließbar ist.

5. Fahrzeug nach einem der Ansprüche 2 - 4,
**dadurch gekennzeichnet,**
**daß** die Aufnahmevorrichtung (30) für den Luftfilter (26) einen Aufsetzsteg (32) für den Luftfilter (26) aufweist, dessen Aufsetzfläche (321) mit Parallelrippen (33) versehen ist, die sich parallel zur Filterfläche erstrecken.

6. Fahrzeug nach einem der Ansprüche 2 - 5,
**dadurch gekennzeichnet,**
**daß** der Wasserablauf (24) im in Einbaulage unteren Bereich (224) der Schale (22) nächst der Aufnahmevorrichtung (30) für den Luftfilter (26) angeordnet ist.

7. Fahrzeug nach einem der Ansprüche 2 - 6,
**dadurch gekennzeichnet,**
**daß** die Aufnahmevorrichtung (30) für den Luftfilter (26) und die den Lufteinlaß (25) bildende Öffnung (28) jeweils nahe einem der in Einbaulage sich in Fahrzeuglängsrichtung erstreckenden Seitenbereiche (222,223) der Schale (22) angeordnet sind.

8. Fahrzeug nach einem der Ansprüche 1 - 7,
**dadurch gekennzeichnet,**
**daß** die den Lufteinlaß (25) bildende Öffnung (28) in dem in Einbaulage oberen Bereich (221) der Schale (22) liegt.

9. Fahrzeug nach einem der Ansprüche 1 - 8,
**dadurch gekennzeichnet,**
**daß** die den Lufteinlaß (25) bildende Öffnung (28) in der Schale (22) mit einem einstückig an die Schale (22) angespritzten Einlaßgitter (29) überdeckt ist.

10. Fahrzeug nach einem der Ansprüche 1 - 9,
**dadurch gekennzeichnet,**
**daß** die den Lufteinlaß (25) bildende Öffnung (28) in Einbaulage der Schale (22) unterhalb eines karosserieseitigen Frischlufteintritts (34) zu diesem in Fahrzeuglängsrichtung versetzt liegt und daß im Frischluftweg zwischen Frischlufteintritt (34) und Öffnung (28) eine von der Schale (22) wegweisende Prallfläche (36) mit Abstand vertikal unter dem Frischlufteintritt (34) angeordnet ist.

11. Fahrzeug nach einem der Ansprüche 1 - 10,
**dadurch gekennzeichnet,**
**daß** an der von der Stirnwand (13) abgekehrten Frontseite (225) der Schale (22) ein Wasserbehälter (42) für eine Scheibenwaschanlage angeordnet ist.

12. Fahrzeug nach Anspruch 11,
**dadurch gekennzeichnet,**
**daß** der Wasserbehälter (42) als einseitig offener Kunststoffhohlkörper gefertigt ist, der mit seiner Öffnung auf die Schale (22) aufgesetzt und längs seines Öffnungsrandes an dieser festgeschweißt ist.

## Claims

1. A vehicle, in particular a passenger car, with a vehicle body shell comprising an engine compartment (15) and a passenger compartment (14) with a bulkhead (13) which separates the engine compartment (15) from the passenger compartment (14) and with a device positioned in the engine compartment (15) to supply fresh air into the passenger compartment (14) through an opening in the bulkhead (1) which has a cowl plenum chamber (23) provided with an air inlet (25), an air outlet (27) and a water outlet and a water filter (26) positioned in the cowl plenum chamber (23),
**characterised by**
a plastic shell (22) which forms the cowl plenum chamber (23) together with the bulkhead (13) with an integrated opening (28) forming the air inlet (25), the edge of which fits tight against the bulkhead (13) covering the bulkhead opening (17) which forms the air outlet (27) and is fixed thereto in such a manner that it can be detached.

2. A vehicle in accordance with claim 1,
**characterised in that**
the shell (22) has a receiving device (30) for the air filter (26) which is preferably injection moulded in one piece and which is positioned in such a manner that in the fitted position the air filter (26) covers the bulkhead opening (17).

3. A vehicle in accordance with claim 2,
**characterised in that**
the air filter (26), held in the receiving device (30) in such a manner that it can be changed, is sealed against the shell (22) on three sides of the filter frame which runs at an angle to the filter surface and against the bulkhead on one side.

4. A vehicle in accordance with claim 2,
**characterised in that**
the air filter (26), held in the receiving device (30) in such a manner that it can be changed, is sealed against the shell (22) on four sides of the filter frame which runs at an angle to the filter surface, and that a recess (39) is provided in the front area (225) of the shell (22) opposite the front filter surface in the direction of air flow which can be closed by means of a cover (40).

5. A vehicle in accordance with one of claims 2 - 4,
**characterised in that**
the receiving device (30) for the air filter (26) has a supporting plate (32) for the air filter (26), the supporting surface (321) of which is provided with parallel ribs (33) which extend parallel to the filter surface.

6. A vehicle in accordance with one of claims 2 - 5,
**characterised in that**
the drainage outlet (24) is positioned in the lower area (224) of the shell (22) in the fitted position next to the receiving device (30) for the air filter (26).

7. A vehicle in accordance with one of claims 2 - 6,
**characterised in that**
the receiving device (30) for the air filter (26) and the opening (28) which forms the air inlet (25) are both positioned close to one of the lateral areas (222, 223) of the shell (22) which extend along the longitudinal axis of the vehicle in the fitted position.

8. A vehicle in accordance with one of claims 1 - 7,
**characterised in that**
the opening (28) which forms the air inlet (25) lies in the upper area (221) of the shell (22) in the fitted position.

9. A vehicle in accordance with one of claims 1 - 8,
**characterised in that**
the opening (28) which forms the air inlet (25) in the shell (22) is covered by an inlet grating (29) which is injection moulded in one piece with the shell (22).

10. A vehicle in accordance with one of claims 1 - 9,
**characterised in that**
in the fitted position of the shell (22), the opening (28) which forms the air inlet (25) lies below and offset (along the longitudinal axis of the vehicle) in relation to a fresh air intake (34) in the body shell, and that a deflector (36) angled away from the shell (22) at a distance vertically below the fresh air intake (34) is positioned in the fresh air path between the fresh air intake (34) and the opening (28).

11. A vehicle in accordance with one of claims 1 - 10,
**characterised in that**
a water container (42) for a screen wash unit is positioned on the front (225) of the shell (22) facing away from the bulkhead (13).

12. A vehicle in accordance with claim 11,
**characterised in that**
the water container (42) is manufactured as a hollow part open on one side, its opening being placed over the shell (22) and the edge of said opening being welded rigidly to the shell (22).

## Revendications

1. Véhicule, en particulier véhicule de tourisme, comportant une carrosserie de véhicule entourant un espace moteur (15) et un habitacle (14), ainsi qu'une paroi frontale (13) séparant l'un de l'autre espace moteur (15) et habitacle (14) et qu'un dispositif, disposé dans l'espace moteur (15), pour l'arrivée d'air frais dans l'habitacle (14) par une ouverture qui existe dans la paroi frontale (13) et présente un caisson de guidage de l'air (23) muni d'une entrée d'air frais (25), d'une sortie d'air (27) et d'une évacuation d'eau, ainsi qu'un filtre à air (26) disposé dans le caisson de guidage de l'air (23), **caractérisé par** une coque (22) en plastique qui, avec la paroi frontale (13) forme le caisson de guidage de l'air (23) et qui présente une ouverture intégrée (28) qui forme l'entrée d'air (25) et qui, en tenant compte de l'ouverture (17) dans la paroi frontale formant la sortie d'air (27), repose de façon étanche, en bordure, sur la paroi frontale (13) et est fixée de façon amovible.

2. Véhicule selon la revendication 1, **caractérisé par le fait que** la coque (22) présente pour le filtre à air (26) un réceptacle (30) qui est de préférence injecté d'une seule pièce et qui est disposé de façon qu'après pose le filtre à air (26) déborde l'ouverture dans la paroi frontale (17).

3. Véhicule selon la revendication 2, **caractérisé par le fait que** le filtre à air (26), reçu avec possibilité d'échange, dans le réceptacle (30), est, sur trois côtés de son cadre orienté transversalement à la surface du filtre, monté étanche contre la coque (22) et, sur un côté, contre la paroi frontale (13).

4. Véhicule selon la revendication 2, **caractérisé par le fait que** le filtre à air (26), reçu, avec possibilité d'échange, dans le réceptacle (30), est, sur tous les quatre côtés de son cadre orienté transversalement à la surface du filtre, monté étanche contre la coque (22) et que, dans la zone avant (225), située en face de la surface avant du filtre, selon la direction de l'écoulement de l'air, de la coque (22), est prévu pour le changement de filtre un évidement (39) qui peut s'obturer avec un couvercle (40).

5. Véhicule selon l'une des revendications 2-4, **caractérisé par le fait que** le réceptacle (30) pour le filtre à air (26) présente pour le filtre à air (26) une planchette d'assise (32) dont la surface d'assise (321) présente des nervures parallèles (33) qui s'étendent parallèlement à la surface du filtre.

6. Véhicule selon l'une des revendications 2-5, **caractérisé par le fait que** l'évacuation d'eau (24) est disposée dans la zone inférieure, après pose, (224) de la coque (22), près du réceptacle (30) pour le filtre à air (26).

7. Véhicule selon l'une des revendications 2-6, **caractérisé par le fait que** le réceptacle (30) pour le filtre à air (26) et l'ouverture (28) formant l'entrée d'air (25) sont respectivement disposés près de l'une des zones latérales (222, 223) de la coque (22) qui, après pose, s'étendent selon la direction longitudinale du véhicule.

8. Véhicule selon l'une des revendications 1-7, **caractérisé par le fait que** l'ouverture (28) formant l'entrée d'air (25) se situe dans la zone supérieure, après pose, (221) de la coque (22).

9. Véhicule selon l'une des revendications 1-8, **caractérisé par le fait que** l'ouverture (28) formant l'entrée d'air (25) dans la coque (22) est recouverte d'une grille d'entrée (29) injectée d'une seule pièce sur la coque (22).

10. Véhicule selon l'une des revendications 1-9, **caractérisé par le fait que** l'ouverture (28) formant l'entrée d'air (25) se situe, après pose de la coque (22), en-dessous d'une entrée d'air frais (34) située sur la carrosserie et décalée par rapport à celle-ci selon la direction longitudinale du véhicule et que sur le trajet de l'air frais entre l'entrée d'air frais (34) et l'ouverture (28) est disposée verticalement en-dessous de l'entrée d'air frais (34) et à une certaine distance, une chicane (36) qui est orientée en sens opposé à la coque (22).

11. Véhicule selon l'une des revendications 1-10, **caractérisé par le fait que** sur la face avant (225), éloignée de la paroi frontale (13), de la coque (22) est disposé un réservoir d'eau (42) pour une installation de lavage du pare-brise.

12. Véhicule selon la revendication 11, **caractérisé par le fait que** le réservoir d'eau (42) est fabriqué sous forme d'un corps creux en plastique qui est ouvert d'un côté, qui, par son ouverture, repose sur la coque (22) et lui est fixé par soudage le long de son bord d'ouverture.
